(19) Europäisches Patentamt
European Patent Office
Office européen des brevets

(11) **EP 2 738 974 B1**

(12) **FASCICULE DE BREVET EUROPEEN**

(45) Date de publication et mention de la délivrance du brevet:
**12.08.2020 Bulletin 2020/33**

(51) Int Cl.:
***H04L 9/08*** *(2006.01)*     ***G09C 1/00*** *(2006.01)*

(21) Numéro de dépôt: **13194961.2**

(22) Date de dépôt: **28.11.2013**

(54) **Procédé de dérivation de clés cryptographiques multiples à partir d'une clé maitresse dans un microprocesseur de sécurité**

Verfahren zur Ableitung von multiplen kryptografischen Schlüsseln von einem Hauptschlüssel in einem Sicherheitsmikroprozessor

Method for deriving multiple cryptographic keys from a master key in a security microprocessor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2012 FR 1261385**

(43) Date de publication de la demande:
**04.06.2014 Bulletin 2014/23**

(73) Titulaire: **Spirtech**
**75002 Paris (FR)**

(72) Inventeur: **Grieu, François**
**75004 Paris (FR)**

(74) Mandataire: **Dupuis-Latour, Dominique**
**Bardehle Pagenberg**
**SO Square Opéra**
**5, rue Boudreau**
**75009 Paris (FR)**

(56) Documents cités:
**WO-A1-02/052782    WO-A2-2005/124506**
**FR-A1- 2 862 150**

- **YEHUDA LINDELL ET AL: "Implementing Two-Party Computation Efficiently with Security Against Malicious Adversaries", 10 septembre 2008 (2008-09-10), SECURITY AND CRYPTOGRAPHY FOR NETWORKS; [LECTURE NOTES IN COMPUTER SCIENCE], SPRINGER BERLIN HEIDELBERG, BERLIN, HEIDELBERG, PAGE(S) 2 - 20, XP019104378, ISBN: 978-3-540-85854-6 * abrégé * * alinéa [0004] * * figure 1 ***
- **PINKAS B ET AL: "Secure Two-Party Computation is Practical", INTERNATIONAL ASSOCIATION FOR CRYPTOLOGIC RESEARCH,, vol. 20090902:075811, 2 septembre 2009 (2009-09-02), pages 1-20, XP061003564,**
- **Bibhudendra Acharya ET AL: "Image Encryption Using Advanced Hill Cipher Algorithm", International Journal of Recent Trends in Engineering, 1 May 2009 (2009-05-01), page 663, XP055585347, Oulu Retrieved from the Internet: URL:http://citeseerx.ist.psu.edu/viewdoc/download?doi=10.1.1.379.2956&rep=rep1&type=pdf**
- **M Nordin ET AL: "Cryptography: A New Approach of Classical Hill Cipher", International Journal of Security and Its Applications, 30 March 2013 (2013-03-30), pages 179-190, XP055585307, Retrieved from the Internet: URL:http://modul.repo.mercubuana-yogya.ac.id/modul/files/pkk/OpenJournalBusiness/14_193.pdf**

EP 2 738 974 B1

    **(Cont. page suivante)**

- **Bibhudendra Acharya ET AL: "Novel Methods of Generating Self-Invertible Matrix for Hill Cipher Algorithm", International Journal of Security, 1 January 2006 (2006-01-01), page 14, XP055585308, Retrieved from the Internet: URL:https://www.cscjournals.org/manuscript /Journals/IJS/Volume1/Issue1/IJS-2.pdf [retrieved on 2019-05-03]**

**Description**

L'invention se rapporte au domaine de la cryptographie appliquée aux microprocesseurs de sécurité.

Elle est notamment applicable aux microprocesseurs de sécurité utilisés :

- dans les cartes à puce constituant un moyen de paiement ou un titre de transport ;
- dans les modules applicatifs sécurisés SAM *(Secure Application Module)* réalisant notamment l'authentification desdites cartes à puce dans les équipements les acceptant ;
- dans les modules d'identification d'abonné SIM *(Subscriber Identity Module)* pour la téléphonie mobile ;
- dans les éléments de sécurité SE *(Secure Element)* des téléphones mobiles NFC ;
- dans les modules de plateformes de confiance *(Trusted Platform Modules)* et modules de sécurité matériels *(Hardware Secure Module)* équipant certains ordinateurs à des fins de sécurité.

L'invention vise à réaliser dans un tel environnement le calcul de multiples clés cryptographiques dans les meilleures conditions de sécurité.

Les microprocesseurs de sécurité, destinés à mettre en œuvre des clés cryptographiques devant par nature rester secrètes, comprennent :

- un moyen de calcul appliquant un algorithme cryptographique ;
- une mémoire de stockage à long terme de données (par exemple EEPROM, Flash, FRAM, RAM sauvegardée par pile, PROM ou ROM), utilisée en particulier pour le stockage de clé(s) cryptographique(s) ;
- une mémoire de stockage de données de travail (RAM ou équivalent) ;
- une mémoire de stockage d'un programme (par exemple de type ROM ou Flash) ;
- une unité centrale de traitement (CPU), comprenant au moins une unité arithmétique et logique (ALU), exécutant ledit programme et notamment organisant les échanges de données entre les éléments précités, ainsi qu'avec l'extérieur du microprocesseur de sécurité ;
- des moyens d'échange d'information avec l'extérieur du microprocesseur de sécurité, par exemple selon un standard de communication défini par les normes ISO/IEC 7816, ISO/IEC 14443, ISO/IEC 15693 ou ISO/IEC 21481, ou par un bus informatique tel que USB, $I_2$C, SPI, LPC, PCI ou PCIe; et
- une enceinte protégeant le microprocesseur de sécurité contre l'observation. Cette enceinte est en général munie d'un dispositif de détection et de réaction aux tentatives d'intrusion. Un boitier ou son enrobage peuvent tenir lieu d'enceinte, en rendant difficile l'observation non destructive.

La présente s'applique spécifiquement aux microprocesseurs de sécurité comprenant un moyen de calcul cryptographique réalisant le chiffrement réversible d'un bloc d'information *(Block Cipher)* sous le contrôle d'une clé cryptographique, selon un algorithme cryptographique de type symétrique. On notera $C := E_K(P)$ l'opération de chiffrement d'un bloc P en un bloc C sous contrôle de la clé K, et $P := D_K(C)$ l'opération inverse de déchiffrement.

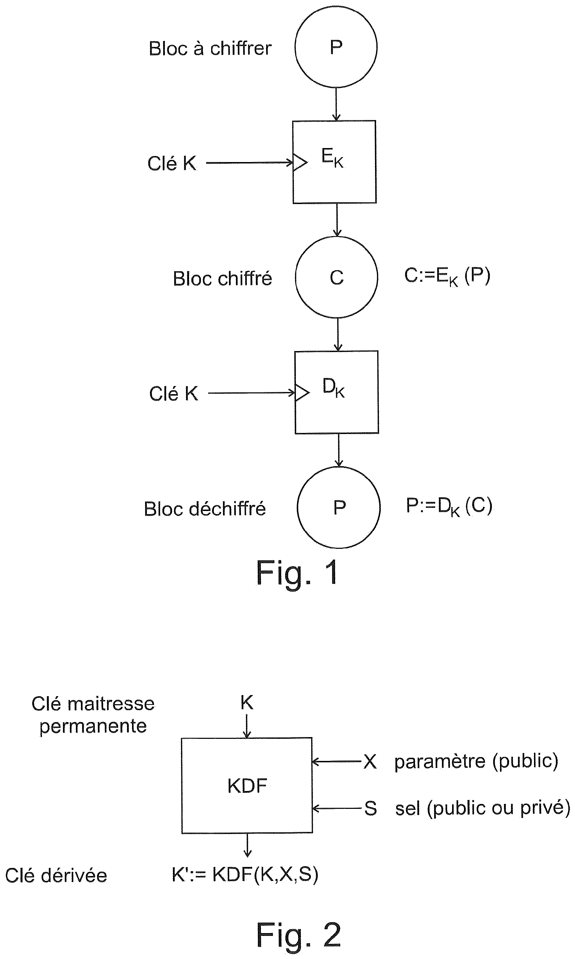

Ces opérations ont été illustrées schématiquement sur la figure 1.

Cette classe d'algorithmes est bien connue, voir Alfred J. Menezes, Paul C. van Oorschot et Scott A. Vanstone, Hanbook of Applied Cryptography chapitre 7, 1997, CRC Press, Lindell Y et al. "Implementing Two-Party Computation Efficiently with Security Against Malicious Adversaries", in Security and Cryptography for Networks, 6th International Conférence on Security and Cryptology for Networks, Sept. 10-12, 2008, vol. 5229 (2008), pp. 2-20 ou encore Pinkas et al. "Secure Two-Party Computation is Practical", in Advances in Cryptology - ASIACRYPT 2009, 15th International Conférence on the Theory and Application of Cryptology and Information Security, Dec. 6-10, 2009, vol. 5912 (2009), pp. 1-20.

Le standard ISO/IEC 18033-3 est consacré à ce type d'algorithmes, et reprend notamment l'algorithme AES de Joan Daemen et Vincent Rijmen, décrit aussi dans le document *FIPS 197 (Federal Information Processing Standards Publications)* publié par le National Institute of Standards and Technology (NIST).

Il est aussi connu de l'état de l'art les documents:

"Image Encryption using Advance Hill Cipher Algorithm" de Bibhudendra Acharya ainsi que le document "Cryptography: A new approach of classical Hill cipher" de M Nordin.

FR2862150 A1 (INNOVA CARD [FR])

WO2005/124506 A2

WO02/052782 A1 (ST MICROELECTRONICS [FR]; WUIDART SYLVIE [FR])

Pour cet algorithme la taille des blocs P et C est b = 128, et la taille de la clé K est k = 128, 192 ou 256 selon les variantes. Tous les exemples donnés ci-après sont directement applicables à AES avec b = k = 128.

Des exemples de microprocesseur de sécurité existants et comprenant des moyens de calcul cryptographique aptes à fonctionner selon AES sont: le *SLE78CLX1600P* de la société Infineon, le *S3FT9KF* de la société Samsung, le *ST33F1M* de la société STMicroelectronics, ou encore la *Java Card SafeNet eToken* de la société Athena Smartcards Solutions Inc. Les moyens de calcul cryptographique peuvent être réalisés sous forme matérielle (c'est le cas pour AES dans les *SLE78CLX1600P* et *S3FT9KF),* ou constituer en un sous-programme du microprocesseur stocké dans la mémoire de stockage de programme (c'est le cas pour AES dans le *ST33F1M*).

Un problème essentiel dans les microprocesseurs de sécurité est d'assurer la confidentialité des clés cryptographiques pendant qu'elles sont utilisées par les moyens de calcul cryptographique.

En effet, l'observation de "canaux auxiliaires" *(Side Channels),* tels que la consommation électrique totale du circuit intégré pendant l'utilisation des moyens de calcul cryptographique ou le rayonnement électromagnétique résultant de la circulation des électrons dans les conducteurs et semiconducteurs de telle ou telle zone du circuit intégré, donne des renseignements sur les calculs intermédiaires effectués pendant le calcul C := $E_K$(P) ou le calcul inverse, lors de l'application mécanique de la suite d'opérations élémentaires.

En combinant mathématiquement les observations faites pendant de multiples calculs, il peut être possible de déterminer la valeur de la clé K, alors que la définition mathématique de l'algorithme vise précisément à le rendre impossible. Une publication fondatrice de ces techniques d'attaque est : Paul Kocher, Joshua Jaffe, Benjamin Jun, Differential Power Analysis (DPA), versée aux actes de la conférence Crypto'99.

Ces attaques, leurs améliorations et leurs contremesures, on fait l'objet de multiples autres travaux universitaires, faisant en général référence à *"Differential Power Analysis"* ou *"Side Channel",* ainsi que de brevets, notamment les US 6 278 783 A, US 6 539 092 A, US 6 510 518 A et US 6 654 884 A.

Les moyens de calcul cryptographique employés dans un microprocesseur de sécurité moderne pour calculer la fonction $E_K$ ou $D_K$ emploient des moyens spécifiques pour se protéger contre ces attaques par le biais de canaux auxiliaires.

Cependant, malgré les précautions prises, des attaques restent concevables quand l'attaquant peut observer l'exécution d'un nombre suffisant de calculs effectués avec la même clé K, et ce tout particulièrement quand l'attaquant connait exactement la valeur (variable à chaque calcul) en entrée ou en sortie de la fonction $E_K$ attaquée.

Un verdict de résistance d'un moyen de calcul cryptographique aux attaques par le biais de canaux auxiliaires est en général prononcé sur la base d'essais, selon les techniques d'attaques connues, portant sur un certain nombre de calculs ; au-delà, la résistance est plus incertaine. Compte tenu notamment de cela, il est usuel de limiter autant que faire se peut le nombre d'usages d'une même clé, et d'en utiliser une nouvelle quand son nombre d'usages dépasse un certain seuil.

L'invention concerne plus précisément la situation où l'on souhaite générer automatiquement, au moyen d'un tel microprocesseur de sécurité, une pluralité de clés cryptographiques - dites "dérivées" - à partir d'une clé cryptogra-phique originale permanente - dite "maitresse" - et d'un paramètre X (au moins). Une fonction adaptée à cet usage est dite "fonction de dérivation de clé" *(Key Derivation Function* ou KDF).

On peut citer à titre d'exemple deux applications courantes :

- la production d'une clé de session à nombre d'usages limité (comme discuté précédemment) à partir d'une clé maitresse permanente K et d'un paramètre X prenant une valeur variable à chaque renouvellement de la clé de session. Ce paramètre X peut être par exemple déterminé au moyen d'un compteur de renouvellement ou/et d'un aléa de taille suffisante ;
- la production initiale et le recalcul ultérieur d'une clé destinée à être insérée dans un équipement particulier parmi une série de tels équipements, à partir d'une clé maitresse permanente K et du paramètre X constitué par le numéro de série de l'équipement. Cette opération, nommée "diversification", permet de réduire le risque lié à l'éventuelle compromission de la clé d'un équipement du lot, tout en permettant de recalculer aisément la clé correspondant à tout équipement du lot.

Une telle fonction de dérivation de clé peut être notée :

$$K' := KDF(K,X,S) \,,$$

où

- K' est la clé dérivée à produire ;

- K est la clé maitresse permanente ;
- X est le paramètre variable dont sera dépendante la clé dérivée K' ; et
- S est un paramètre optionnel, nommé sel (*salt*), dont est également fonction la clé dérivée K'.

L'idéal théorique attendu d'une telle fonction est que, en fixant S supposé public et pour un adversaire ignorant K choisi au hasard, il soit impossible de distinguer si un dispositif à qui l'on fournit des X distincts en entrée produit en sortie des valeurs au moyen de la fonction KDF(K,X,S), ou bien produit des valeurs au hasard.

À titre d'illustration du rôle du sel S, on peut, en utilisant plusieurs valeurs distinctes de S, produire autant de séries distinctes de clés dérivées : ainsi, dans l'exemple indiqué ci-dessus de la production d'une clé de session (session caractérisée par une valeur de X), on pourra générer une clé destinée au chiffrement et une autre, différente, pour le contrôle de l'intégrité. On notera que S peut être public ou secret selon les applications, alors que le paramètre X est supposé public (c'est une nécessité dans les applications des fonctions de dérivation de clés illustrées ci-dessus).

La fonction de dérivation de clé, notamment dans le cas de l'invention, peut faire appel à un algorithme de chiffrement par bloc de type symétrique. Un exemple simple et courant est $KDF(K,X) := E_K(X)$. En effet, dans l'industrie des cartes à puces et plus généralement celle des microprocesseurs de sécurité, il est particulièrement courant d'employer une fonction de dérivation de clé faisant appel à un algorithme de chiffrement par bloc de type symétrique, puisque le moyen de calcul correspondant existe, et, contrairement à la plupart des autres alternatives disponibles, offre un niveau de sécurité élevé et évalué aux regards des attaques par exploitation des canaux auxiliaires.

Dans le contexte décrit ci-dessus, il est souvent impossible de limiter le nombre d'usages de la clé maitresse K. Par exemple, dans une application de type "diversification", une telle limitation reviendrait à limiter le nombre d'équipements d'un lot qu'il est possible de traiter avec un même SAM appelé à calculer ou recalculer la clé des équipements avec lesquels il va interagir.

Mais en l'absence d'une telle limitation, la sécurité offerte par les mesures de protection mises en œuvre contre les attaques de type "DPA" ou *"Side Channel"* par les moyens de calcul cryptographiques dont est muni un microprocesseur de sécurité réalisant une opération de dérivation de clé risque d'être insuffisante.

Plus précisément, les techniques d'attaques connues exploitant l'information filtrant par le biais de canaux auxiliaires, pour déterminer la clé K employée dans de multiples opérations par les moyens de calcul cryptographiques d'un microprocesseur de sécurité sont considérablement plus efficaces (voire possibles seulement) lorsqu'elles exploitent la connaissance des blocs d'entrées P ou des blocs de sortie C du calcul $C := E_K(P)$.

Cette condition est remplie dans les réalisations connues de fonctions de dérivation de clé, par exemple pour $KDF(K,X) := E_K(X)$ avec X public, où le bloc d'entrée de la fonction $E_K$ est X. De ce fait, une telle fonction de dérivation de clé est potentiellement vulnérable.

Une première possibilité consiste à choisir une fonction de dérivation de clé $KDF(K,X,S) := E_K(E_S(X))$ où S est tenu secret, ce qui prive en première analyse l'adversaire de la connaissance de l'entrée de la fonction $E_K$. Cependant, un adversaire habile et pouvant faire un nombre suffisant d'expériences pourrait retrouver S par une attaque DPA exploitant la connaissance des X à l'entrée de $E_S$, en déduire les $E_S(X)$, et ainsi retrouver K par une attaque DPA exploitant la connaissance des $E_S(X)$ à l'entrée de $E_K$.

Une telle possibilité est donc peu efficace au regard d'un adversaire connaissant les principes du système - ce que l'on doit supposer conformément aux principes énoncés par l'article fondateur d'Auguste Kerckhoffs *La cryptographie militaire,* 1883 - et elle n'est d'aucune efficacité pour un adversaire connaissant de plus S.

Il en va de même pour l'implémentation directe d'autres fonctions de dérivation de clé connues fondées sur des algorithmes symétriques, comme celle décrite par le document *NIST SP 800-108* dans sa variante utilisant l'algorithme "CMAC" décrit par le document *NIST SP 800-38B,* lui-même fondé sur un algorithme de chiffrement par bloc, typiquement AES.

Le problème de l'invention est la recherche d'une parade à cette vulnérabilité résiduelle.

L'objet de l'invention est ainsi de proposer un procédé de dérivation de multiples clés cryptographiques à partir d'une clé maitresse dans un microprocesseur de sécurité, employant les moyens de calcul cryptographiques opérant selon un algorithme de chiffrement par bloc de type symétrique existant dans ce microprocesseur de sécurité, et réduisant le risque de compromission des clés par le biais de canaux auxiliaires en deçà du risque résultant de l'application des techniques connues.

À cet effet, l'invention propose un procédé de génération de clés cryptographiques dérivées comprenant les caractéristiques énoncées dans la revendication 1.

Diverses formes de mise en œuvre subsidiaires avantageuses sont énoncées dans les sous-revendications.

On va maintenant décrire un exemple de mise en œuvre du dispositif de l'invention, en référence aux dessins annexés où les mêmes références numériques désignent d'une figure à l'autre des éléments identiques ou fonctionnellement semblables.

La Figure 1, précitée, illustre un calcul de chiffrement/déchiffrement réversible d'un bloc d'information sous le contrôle d'une clé cryptographique par un algorithme cryptographique de type symétrique.

La Figure 2, précitée, illustre les divers paramètres impliqués dans la mise en œuvre d'un algorithme de génération de clés dérivées.

La Figure 3 illustre, sous forme de blocs fonctionnels, les différentes étapes du procédé de génération de clés cryptographiques dérivées selon l'invention.

La Figure 4 illustre, sous forme de blocs fonctionnels, un perfectionnement apporté au procédé de la Figure 3.

La Figure 5 est une adaptation partielle de la Figure précédente, illustrant une variante de mise en œuvre du perfectionnement de la Figure 4.

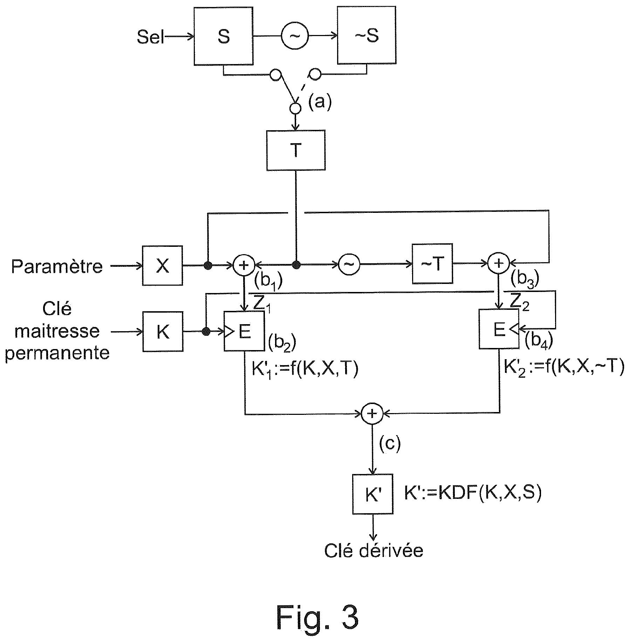

La Figure 3 illustre, sous forme de blocs fonctionnels, les différentes étapes du procédé de génération de clés cryptographiques dérivées selon l'invention dans sa forme la plus simple.

À la conception du système est choisie une fonction de dérivation de clé KDF(K,X,S) mathématiquement définie par :

$$K' := KDF(K,X,S) := F(K,X,S) \oplus F(K,X,{\sim}S),$$

où :

- $F(K,X,Y) = E_K(X \oplus Y)$,
- $E_K$ est la fonction cryptographique de chiffrement par bloc de type symétrique du microprocesseur de sécurité contrôlé par la clé K,
- la notation $U \oplus V$ désigne le OU-exclusif bit à bit des valeurs U et de V, ou une autre opération commutative, c'est-à-dire une opération dont le résultat est indépendant de l'ordre des deux opérandes U et V, et
- la notation ${\sim}U$ désigne le complément bit à bit de la valeur U, ou une autre opération involutive, c'est-à-dire une opération qui lorsqu'elle est effectuée sur un opérande U donne un résultat tel que ${\sim}({\sim}U) = U$.

Chaque calcul de la fonction KDF(K,X,S) est alors effectué en procédant comme suit :

a) choisir au hasard $T := S$ ou $T := {\sim}S$ ;

b) puis calculer $K'_1 := F(K,X,T)$ et calculer $K'_2 := F(K,X,{\sim}T)$ en employant les moyens de calcul cryptographique du microprocesseur de sécurité ;

c) puis combiner $K'_1$ et $K'_2$ par une opération commutative telle que le OU-exclusif bit à bit pour produire $K' := K'_1 \oplus K'_2$.

Plus précisément, comme illustré Figure 3, ces opérations se décomposent de la façon suivante :

a) choisir au hasard $T := S$ ou $T := {\sim}S$;

b1) calculer $Z_1 := X \oplus T$ ;

b2) calculer $K'_1 := E_K(Z_1)$ en employant les moyens de calcul cryptographique du microprocesseur de sécurité ;

b3) calculer $Z_2 := X \oplus {\sim}T$ ou encore $Z_2 := {\sim}Z1$ ;

b4) calculer $K'_2 := EK(Z_2)$ en employant les moyens de calcul cryptographique du microprocesseur de sécurité ;

c) calculer $K' := K'_1 \oplus K'_2$.

On notera que l'ordre des opérations b1) b2) b3 b4) peut être modifié, mais est essentiellement invariable d'une exécution à l'autre.

Par ailleurs, le choix de l'étape a) est avantageusement opéré d'une manière telle que le temps d'exécution de ce choix soit indépendant du choix effectué.

En effet, si le choix fait à l'étape a) conduisait à une durée d'exécution différente, l'attaquant pourrait séparer les mesures qu'il obtient en fonction de leur durée, ce qui compromet l'efficacité de la méthode de l'invention. Avec une durée de l'étape a) indépendante du choix effectué, ce risque disparait.

Un exemple d'étape a) exécutée en un temps indépendant du choix effectué comprend les étapes suivantes :

- établir au moyen d'un dispositif matériel intégré au microprocesseur de sécurité, ou d'un algorithme auxiliaire, un bit aléatoire 0 ou 1 ;
- ajouter 1, produisant 1 ou 2 ;
- multiplier par 0x55, produisant 0x55 ou 0xAA;
- dupliquer cet octet en une constante R aussi large que S, obtenant donc R = 0x55..55 ou R = 0xAA..AA; et

6

- calculer T := (S⊕0x55..55)⊕R, obtenant donc soit S soit ∼S.

Diverses variantes de l'invention peuvent être envisagées, notamment :

- utiliser une opération différente du OU-exclusif pour ⊕ à l'étape c) pourvu que cette opération soit commutative, par exemple une addition ;
- utiliser pour ∼ aux étapes a) et b) une transformation différente du complément bit à bit pourvu qu'elle soit une involution, par exemple un changement de signe, le OU exclusif avec une constante, certaines permutations de bits, ou la combinaison de telles opérations ;
- utiliser pour F à l'étape b) une autre fonction de dérivation de clé dont K est la clé maitresse et fondée sur un algorithme de chiffrement par bloc de type symétrique correspondant aux moyens de calcul cryptographique du microprocesseur de sécurité ; il existe des avantages particuliers à ce que les arguments X et Y de cette fonction F(K,X,Y) soient combinés par OU-exclusif, ou bien une opération similaire.

De façon caractéristique et du fait des propriétés énoncées, quelle que soit la fonction F(K,X,Y) choisie et les variantes retenues pour l'opération ⊕ et la transformation ∼ le résultat obtenu à l'étape c) est indépendant du choix fait à l'étape a), et est mathématiquement :

$$K' := KDF(K,X,S) := F(K,X,S) \oplus F(K,X,\sim S),$$

de sorte que le procédé de l'invention produit un résultat déterminé fonction seulement de K,X,S et du choix de F.

Ce procédé présente en outre, de manière caractéristique, la propriété KDF(K,X,S) = KDF(K,X,∼S). Cette propriété impose que, lors de l'utilisation de deux constantes S et S' pour deux usages différents, il faut prendre la précaution de choisir S et S' non seulement différentes, mais aussi telles que S' ≠ ∼S. Cela est en pratique aisé.

L'invention procure un surcroit de protection contre les attaques par exploitation de canaux auxiliaires, comme on va l'illustrer par comparaison avec une fonction de dérivation conventionnelle.

Un programme pour un microprocesseur de sécurité calculant la fonction de dérivation KDF(K,X,S) := $E_K$(X ⊕ S) enchainera les opérations suivantes :

1) calculer Z := X ⊕ S ;
2) calculer K' := $E_K$(Z) par emploi des moyens de calcul cryptographique du microprocesseur de sécurité.

Cet emploi se produit à chaque exécution de la séquence de calcul de KDF(K,X,S), après un délai essentiellement fixe après le début et avant la fin de cette séquence; l'adversaire connaissant X et S peut en déduire Z, qui est l'entrée de la fonction $E_K$ au moment de cet emploi.

L'adversaire connaissant S est donc précisément dans les conditions de l'attaque décrite par l'article de Kocher et al. précité, conditions qui sont aussi celles permettant de conduire les plus redoutables des attaques par exploitation de canaux auxiliaires publiées ultérieurement. Si l'adversaire ignore initialement S, une variante connue de cette attaque lui permet de déterminer S.

Par contre, avec les enseignements de l'invention, il n'existe pas de délai fixe depuis le début ou la fin de la séquence de calcul décrite tel que l'attaquant connaisse l'entrée (ou la sortie) de la fonction $E_K$ calculée à cet instant par les moyens de calcul cryptographique du microprocesseur de sécurité, ceci sans considération de la durée de l'opération a) ; de sorte que les attaques existantes fonctionnent nettement moins bien.

En première analyse, le rapport signal/bruit des mesures effectuées par l'attaquant est dégradé par un facteur 2, et par conséquent le nombre de mesures nécessaires pour une attaque réussie, qui varie sensiblement en fonction inverse du carré de ce rapport, est multiplié par 4.

De plus, avec une durée de l'étape a) indépendante du choix effectué, les grandeurs mesurées par l'attaquant pendant l'étape b2) [ou b4)] quand elles correspondent au calcul de $E_K$(X ⊕ S) et quand elles correspondent au calcul $E_K$(X ⊕ ∼S) s'ajoutent algébriquement dans les tentatives de corrélation effectuées par l'attaquant, et s'annulent en partie, de sorte que la protection obtenue est considérablement meilleure, dans une proportion qui dépend de l'algorithme cryptographique, de la méthode d'attaque, et de la fonction F(K,X,S).

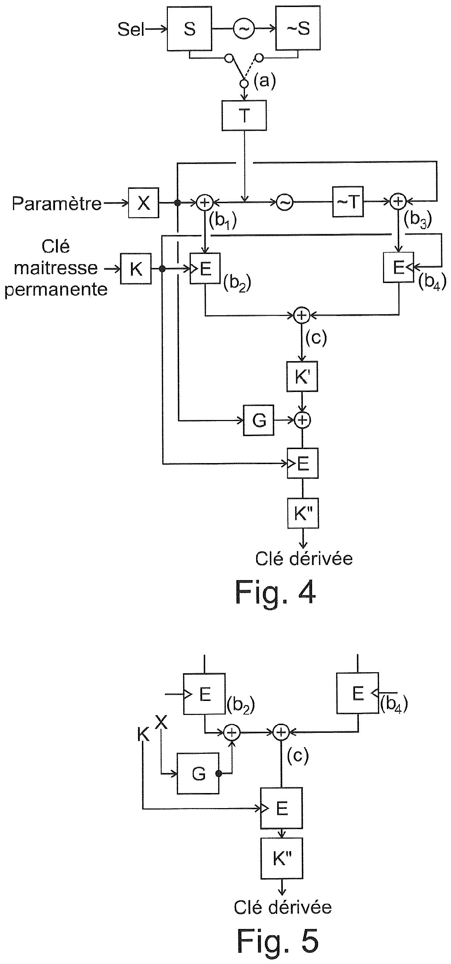

On va maintenant exposer un perfectionnement apporté au procédé que l'on vient de décrire, en référence aux Figures 4 et 5.

En effet, le procédé que l'on vient de décrire, qui met en œuvre une fonction de diversification de clé KDF(K,X,S) := $E_K$(X ⊕ S) ⊕ $E_K$(X ⊕ ∼S), présente certaines limitations, notamment :

A) KDF(K,X,S) = KDF(K,~X,S), ce qui est contraire à l'idéal théorique pour une fonction de dérivation de clé ; et
B) KDF(K,X,S') = KDF(K,(X ⊕ S ⊕ S'),S), ce qui crée une corrélation indésirable entre les clés dérivées pour deux valeurs arbitraires S et S'.

Pour remédier à ces inconvénients, un perfectionnement consiste à compléter le procédé précédent par des opérations supplémentaires sur le résultat produit, pour construire une fonction de dérivation de clé de type

$$K'' := KDF2(K,X,S) := E_K((F(K,X,S) \oplus F(K,X,\sim S)) \oplus G(X))$$

où G est une fonction simple de X, telle l'identité, ou l'extraction de certains bits, ou plus généralement une fonction telle que chaque bit de G(X) est le OU-exclusif de certains bits déterminés de X, avec une polarité déterminée, cette définition étant mathématiquement équivalente à la propriété caractéristique que G(U ⊕ V) ⊕ G(U) ⊕ G(V) est constant.

L'introduction de cette fonction G fait disparaitre la limitation A) ci-dessus, et plus généralement rapproche la fonction de dérivation KDF2 de l'idéal mathématique, sauf si G est une fonction constante. La limitation B) ci-dessus disparait également, sauf si les constantes S et S' sont telles que G(S') = G(S) ou G(S') = G(~S), ce qu'il est aisé d'éviter en pratique.

La propriété caractéristique KDF2(K,X,S) = KDF2(K,X,~S) reste inchangée.

Dans la mise en œuvre illustrée Figure 4, après l'étape c) de calcul de la valeur K' := K'$_1$ ⊕ K'$_2$, on combine K' avec G(X) par l'opération ⊕, puis on chiffre le résultat avec la clé K en employant les moyens de calcul cryptographique du microprocesseur de sécurité. On observera cependant que

$$KDF2(K,X,S) := E_K((F(K,X,S) \oplus F(K,X,\sim S)) \oplus G(X))$$

peut être calculé aussi comme

$$KDF2(K,X,S) := E_K(F(K,X,S) \oplus (F(K,X,\sim S) \oplus G(X)))$$

ou encore comme

$$KDF2(K,X,S) := E_K((F(K,X,S) \oplus G(X)) \oplus F(K,X,\sim S))$$

Il s'agit là de variantes de réalisation qui peuvent se révéler avantageuses. Elles se résument à effectuer l'opération ⊕ G(X) à l'issue de l'étape b4) ou b2), plutôt qu'à l'issue de l'étape c), comme illustré sur la variante de la Figure 5, où l'on a représenté l'opération ⊕ G(X) effectuée après l'étape b2) de calcul de K'$_1$.

Le procédé de l'invention peut être complété par d'autres techniques connues de lutte contre les attaques par exploitation de canaux auxiliaires, notamment l'utilisation de temporisations et horloges aléatoires, ou le masquage par des valeurs aléatoires. Dans de nombreuses applications, K ou/et S seront stockées dans la mémoire de stockage à long terme du microprocesseur de sécurité, éventuellement sur-chiffrées. Pour des raisons de commodité notamment, l'ordre ou/et la polarité des bits en entrée et en sortie de la fonction de chiffrement mise en œuvre par les moyens de chiffrement du microprocesseur de sécurité peut être modifié, ou/et il peut être utilisé la fonction D$_K$ en lieu et place de la fonction E$_K$.

## Revendications

1. Un procédé de génération de clés cryptographiques dérivées, destinées à un algorithme cryptographique de chiffrement/déchiffrement réversible de blocs d'information de type symétrique mis en œuvre au sein d'un microprocesseur de sécurité,
dans lequel la clé dérivée K' est générée au sein du microprocesseur de sécurité par une fonction de dérivation de clé KDF à partir d'une clé maitresse permanente K, d'un paramètre variable X dont dependra la clé dérivée et d'un paramètre additionnel de sel S, avec K' := KDF(K,X,S), **caractérisé en ce que** la fonction de dérivation de clé KDF est :

$$KDF(K,X,S) := F(K,X,S) \oplus F(K,X,\sim S)$$

où :

- $F(K,X,Y) = E_K(X \oplus Y)$, $E_K$ étant une fonction cryptographique, contrôlée par la clé K, dudit algorithme de chiffrement/déchiffrement réversible mis en œuvre au sein du microprocesseur de sécurité,
- la notation $U \oplus V$ désigne une opération commutative, qui lorsqu'elle est effectuée sur des opérandes U et V donne un résultat indépendant de l'ordre de ces opérandes, et
- la notation $\sim U$ désigne une opération involutive, qui lorsqu'elle est effectuée sur un opérande U donne un résultat tel que $\sim(\sim U) = U$, du groupe formé par: le complément bit à bit de U ; le changement de signe de U ; le OU exclusif de U avec une constante ; une permutation involutive de bits de U; et une combinaison d'opérations distinctes choisies parmi les opérations précédentes,

et **en ce que** chaque calcul de la fonction KDF(K,X,S) comprend les étapes suivantes, réalisées par le microprocesseur de sécurité :

a) sélection aléatoire d'une variable $T := S$ ou $T := \sim S$;
b) calcul de $K'_1 := F(K,X,T)$ et $K'_2 := F(K,X,\sim T)$; et
c) combinaison de $K'_1$ et $K'_2$ pour produire la clé dérivée $K' := K'_1 \oplus K'_2$, de sorte que la valeur du résultat produit est indépendante de la sélection effectuée à l'étape a), alors que les valeurs manipulées à l'étape b) en dépendent.

**2.** Le procédé de la revendication 1, dans lequel l'opération commutative $U \oplus V$ est une opération du groupe formé par: le OU-exclusif bit à bit de U et V; l'addition de U et V ; et une combinaison des opérations précédentes.

**3.** Le procédé de la revendication 1, comprenant en outre des opérations supplémentaires de calcul d'une fonction de dérivation de clé KDF2 générant une clé dérivée $K'' := KDF2(K,X,S)$, la fonction KDF2 étant :

$$K'' := KDF2(K,X,S) := E_K(KDF(K,X,S) \oplus G(X))$$

où G est une fonction de X du groupe formé par: l'identité ; l'extraction de certains bits de X ; le OU-exclusif de certains bits déterminés de X avec une valeur de polarité binaire déterminée ; et une combinaison des opérations précédentes ;
et dans lequel la clé K" est générée par le procédé de la revendication 1 avec, après les étapes a) à c), les étapes suivantes, réalisées par le microprocesseur de sécurité :

d) calcul de $R_d := G(X)$;
e) calcul de $Re := K' \oplus R_d$ ;
f) calcul de $K'' := E_K(R_e)$.

**4.** Le procédé de la revendication 3, dans lequel les étapes c) de la revendication 1 et e) de la revendication 3 sont regroupées en une étape e') telle que :
e') calcul de $Re := (K'1 \oplus Rd) \oplus K'2$.

**Patentansprüche**

**1.** Verfahren zur Erzeugung von abgeleiteten kryptografischen Schlüsseln für einen symmetrischen kryptografischen Algorithmus zum reversiblen Verschlüsseln/Entschlüsseln von Informationsblöcken, der in einem Sicherheitsmikroprozessor implementiert ist, wobei der abgeleitete Schlüssel K' in dem Sicherheitsmikroprozessor durch eine Schlüsselableitungsfunktion KDF ausgehend von einem permanenten Master-Schlüssel K, von einem variablen Parameter X, von dem der abgeleitete Schlüssel abhängen wird, und von einem zusätzlichen Salz-Parameter S, wobei K' := KDF(K,X,S), erzeugt wird, **dadurch gekennzeichnet, dass** die Schlüsselableitungsfunktion KDF ist:

$$KDF(K,X,S) := F(K,X,S) \oplus F(K,X,{\sim}S),$$

worin:

- F(K,X,Y) = $E_K$(X $\oplus$ Y), $E_K$ eine durch den Schlüssel K gesteuerte kryptografische Funktion des Algorithmus zum reversiblen Verschlüsseln/Entschlüsseln, der in einem Sicherheitsmikroprozessor implementiert ist, ist,
- der Begriff U $\oplus$ V eine Kommutativoperation ist, die, wenn sie an den Operanden U und V vorgenommen wird, ein von der Größenordnung dieser Operanden unabhängiges Ergebnis ergibt, und
- der Begriff ~U eine Involutivoperation bezeichnet, die, wenn sie an einem Operanden U vorgenommen wird, ein Ergebnis ergibt wie ~(~U) = U, der Gruppe, die gebildet ist von: dem bitweisen Komplement von U; der Vorzeichenänderung von U; dem exklusiven ODER von U mit einer Konstante; einer involutorischen Permutation von Bits von U; und einer Kombination aus verschiedenen Operationen, die aus den obigen Operationen ausgewählt sind;

und dadurch, dass jede Berechnung der Funktion KDF(K,X,S) die folgenden Schritte umfasst, die durch den Sicherheitsmikroprozessor ausgeführt werden:

a) zufälliges Auswählen einer Variablen T := S oder T := ~S;
b) Berechnen von K'$_1$ := F(K,X,T) und K'$_2$ := F(K,X,~T); und
c) Kombinieren von K'$_1$ und K'$_2$, um den abgeleiteten Schlüssel K' := K'$_1$ $\oplus$ K'$_2$ herzustellen, so dass der Wert des hergestellten Ergebnisses unabhängig ist von der in Schritt a) vorgenommenen Auswahl, während die in Schritt b) gehandhabten Werte davon abhängen.

2. Verfahren nach Anspruch 1, bei dem die Kommutativoperation U $\oplus$ V eine Operation der Gruppe ist, die gebildet ist von: dem bitweisen exklusiven ODER von U; der Addition von U und V; und einer Kombination der obigen Operationen.

3. Verfahren nach Anspruch 1, ferner umfassend: weitere Operationen zum Berechnen einer Schlüsselableitungsfunktion KDF2, die einen abgeleiteten Schlüssel K" := KDF2(K,X,S) erzeugen, wobei die Funktion KDF2 ist:

$$K" := KDF2(K,X,S) := E_K(KDF(K,X,S) \oplus G(X)),$$

worin G eine Funktion von X der Gruppe ist, die gebildet ist von: der Identität; der Extraktion bestimmter Bits von X; dem exklusiven ODER bestimmter Bits von X mit einem bestimmten binären Polaritätswert; und einer Kombination der obigen Operationen;
und bei dem der Schlüssel K" erzeugt wird durch das Verfahren nach Anspruch 1, mit, nach den Schritten a) bis c), den folgenden Schritten, die durch den Sicherheitsprozessor ausgeführt werden:

d) Berechnen von $R_d$ := G(X);
e) Berechnen von $R_e$ := K' $\oplus$ $R_d$;
f) Berechnen von K" := $E_K(R_e)$.

4. Verfahren nach Anspruch 3, bei dem die Schritt c) von Anspruch 1 und e) von Anspruch 3 in einem Schritt e') zusammengefasst werden wie:
e') Berechnen von $R_e$:= (K'$_1$ $\oplus$ $R_d$) $\oplus$ K'$_2$.

## Claims

1. A method of generating derived cryptographic keys for a reversible symmetric cryptographic algorithm enciphering /deciphering information blocks, implemented within a security microprocessor, wherein derived key K' is generated within the security microprocessor by a key derivation function KDF from a permanent master key K, a variable parameter X on which the derived key will depend and an additional salt parameter S, with K' := KDF(K,X,S), **characterized in that** the key derivation function KDF is:

$$KDF(K,X,S) := F(K,X,S) \oplus F(K,X,\sim S)$$

where:

- $F(K,X,S) = E_K(X \oplus Y)$, wherein $E_K$ is a cryptographic function, controlled by key K, of said reversible enciphering/deciphering algorithm implemented within the security microprocessor,
- the notation $U \oplus V$ denotes a commutative operation that, when performed on operands U and V, gives a result independent of the order of these operands, and
- the notation $\sim U$ denotes an involutive operation that when performed on an operand U gives a result such that $\sim(\sim U) = U$, from the group comprised of: bitwise complement of U; sign change of U; exclusive OR of U with a constant; an involutive bit permutation of U; and a combination of distinct operations chosen among the preceding operations,

and **in that** each calculation of the function KDF(K,X,S) comprises the following steps, performed by the security microprocessor:

a) randomly selecting a variable $T := S$ or $T := \sim S$;
b) calculating $K'_1 := F(K,X,T)$ and $K'_2 := F(K,X,\sim T)$; and
c) combining $K'_1$ and $K'_2$ to produce the derived key $K' := K'_1 \oplus K'_2$, so that the value of the produced result is independent of the selection made at step a), whereas the values handled at step b) depend thereon.

2. The method of claim 1, wherein the commutative operation $U \oplus V$ is an operation of the group comprised of: bitwise exclusive OR of U and V; addition of U and V; and a combination of the preceding operations.

3. The method of claim 1, further comprising additional operations of calculating a key derivation function KDF2 which generates a derived key $K'' := KDF2(K,X,S)$, the function KDF2 being

$$K'' := KDF2(K,X,S) := E_K(KDF(K,X,S) \oplus G(X))$$

where G is a function of X of the group comprised of: identity, extraction of certain bits from X; exclusive-OR of certain determined bits of X with a value having a determined binary polarity; and a combination of the preceding operations;

and wherein the key K" is generated by the method of claim 1 including, after steps a) to c), the following steps performed by the security microprocessor:

d) calculating $R_d := G(X)$;
e) calculating $Re := K' \oplus R_d$;
f) calculating $K'' := E_K(Re)$.

4. The method of claim 3, wherein steps c) of claim 1 and e) of claim 3 are grouped together into one step e') such that:
e') calculating $Re := (K'_1 \oplus R_d) \oplus K'_2$.

Fig. 1

Fig. 2

Fig. 3

Fig. 4

Fig. 5

EP 2 738 974 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2862150 A1
- WO 2005124506 A2
- WO 02052782 A1
- US 6278783 A
- US 6539092 A
- US 6510518 A
- US 6654884 A

**Littérature non-brevet citée dans la description**

- **ALFRED J. MENEZES ; PAUL C. ; VAN OORSCHOT ; SCOTT A. VANSTONE.** Hanbook of Applied Cryptography. CRC Press, 1997
- **LINDELL Y et al.** Implementing Two-Party Computation Efficiently with Security Against Malicious Adversaries. *Security and Cryptography for Networks, 6th International Conférence on Security and Cryptology for Networks,* 2008, vol. 5229, 2-20
- **PINKAS et al.** Secure Two-Party Computation is Practical. *Advances in Cryptology - ASIACRYPT,* 2009
- *15th International Conférence on the Theory and Application of Cryptology and Information Security,* 06 Décembre 2009, vol. 5912, 1-20
- **PAUL KOCHER ; JOSHUA JAFFE ; BENJAMIN JUN.** Differential Power Analysis (DPA). *conférence Crypto'99*